# EUROPEAN PATENT SPECIFICATION

(11) **EP 1 644 802 B1**
(45) Date of publication and mention of the grant of the patent: **23.11.2016**
(21) Application number: 04777324.7
(22) Date of filing: 28.06.2004
(51) Int. Cl.: G06F 21/10, G06F 21/53, G06F 21/57

(54) **DUAL VIRTUAL MACHINE AND TRUSTED PLATFORM MODULE ARCHITECTURE FOR NEXT GENERATION MEDIA PLAYERS**
ZWEIFACHE VIRTUELLE MASCHINE UND VERTRAUENSWÜRDIGE PLATTFORM-MODULARCHITEKTUR FÜR MEDIA-ABSPIELGERÄTE DER NÄCHSTEN GENERATION
DOUBLE MACHINE VIRTUELLE ET ARCHITECTURE DE MODULE DE PLATE-FORME FIABLE POUR LECTEURS MULTIMEDIA DE PROCHAINE GENERATION

(30) Priority: 27.06.2003 US 481034 P; 07.07.2003 US 481066 P; 05.08.2003 US 493072 P
(43) Date of publication of application: 12.04.2006
(73) Proprietor: Disney Enterprises, Inc., Burbank, CA 91521-0158 (US)
(72) Inventor: WATSON, Scott, Santa Clarita, California 91387 (US)
(74) Representative: Viering, Jentschura & Partner mbB Patent- und Rechtsanwälte
(86) International application number: PCT/US2004/021048
(87) International publication number: WO 2005/001666

(56) References cited:
- EP-A2- 1 280 042
- US-A- 4 792 895
- US-A- 4 831 541
- US-A1- 2002 161 996
- TAL GARFINKEL ET AL: "Flexible OS Support and Applications for Trusted Computing", PROCEEDINGS OF HOTOS'03: 9TH WORKSHOP ON HOT TOPICS IN OPERATING SYSTEMS, MAY 18-21, 2003, LIHUE (KAUAI), HAWAII, USA, USENIX, 18 May 2003 (2003-05-18), pages 145-150, XP007917071, ISBN: 978-1-931971-17-1

## Description

### BACKGROUND

### 1. Field:

The invention relates to a media player according to the preamble of claim 1 and to a method according to the preamble of claim 7.

The disclosure relates to developing new systems and methods of security, including copy protection for removable media players.

### 2. General Background and State of the Art:

A media player and a method of the initially-mentioned types are known, e.g., from EP 1280042 A2.

A virtual machine (VM) is a term used to describe software that acts as an interface between compiler code and the microprocessor (or "hardware platform") that actually performs the program's instructions. A compiler is a special program that processes statements written in a particular programming language and turns them into binary machine language or "code" that a computer's processor uses.

Sun Microsystems, developers of the Java programming language and runtime environment, is well known for their development of the Java Virtual Machine. A Java virtual machine Interprets compiled Java binary code (called byte code) for a computer's processor (or "hardware platform") so that it can perform a Java program's instructions.

Java was designed to allow application programs to be built that could be run on any platform without having to be rewritten or recompiled by the programmer for each separate platform. Once a Java virtual machine has been provided for a platform, any Java program can run on that platform. A Java virtual machine makes this possible because it is aware of the specific instruction lengths and other particularities of the platform.

A virtual machine is an abstract computing machine. Like a real computing machine, it has an instruction set and manipulates various memory areas at run time. It is reasonably common to implement a programming language using a virtual machine; the best-known virtual machine may be the P-Code machine of UCSD Pascal.

A virtual machine can otherwise more generally describe either an operating system or any program that runs a computer.

There has been a long felt need to develop improved methods of copy protection in next generation media players, such as a DVD or CD player.

One known content security system used for DVD's is the Content Scramble System (CSS) whereby the data on a DVD is encrypted. The DVD player then decrypts the data as it reads the disc using a 40 bit decryption key. A fatal flaw of CSS, however, proved to be that its keys and algorithms were static. The encryption algorithm was reverse engineered, and every possible decryption key that would play existing DVD discs was made available. Once the secret escaped, the system was forever compromised since there was no way to renew the security algorithms or keys. There are now many programs available to consumers which remove all security from DVD content with a single "click".

Content owners do not want this to happen again, especially as the fidelity of the content increases. The next content security system should therefore not be vulnerable in this way.

Software vendors have also faced their share of piracy, but given the nature of computers, they have taken a different approach than that used in the entertainment industry for DVDs. Historically, packaged software program (i.e. computer games) manufacturers have protected their content with "procedural security". That is, there is no static pre-defined method for securing programs, instead each software producer writes or procures a "security code" to secure their content. This procedural security code varies in complexity and technique on a program by program basis, but most importantly, since each program has a different security software implementation, it is not possible to write a general purpose 'remove security' program, like those written to circumvent DVD security.

Another known method of copy protection is writing hardware specific instructions. The problem with such a method is that this is extremely limiting. With this method, a different set of instructions must be rendered for each hardware configuration. This is somewhat impractical.

Therefore, a method of providing copy protection to hardware such as media players, that is not hardware specific, is desired.

EP 1 280 042 A2 discloses a computer platform for providing copy protection, the computer platform comprising: a security dual virtual machine designed to support security decryption and decoding functions for the computer platform; an application virtual machine designed to support application level functions for the media player through a user interface, and a processing unit configured to run a security virtual machine and application virtual machine.

"Tal Garfinkel et al.: "Flexible OS support and applications for trusted computing", prodeeindgs of HotOS'03: 9th workshop on hot topics in operating systems, May 18-21, 2003, Lihue (Kauai), Hawai, USA, Usenix, 18 May 2003 (2003-05-18), pages 145-150, XP007917071, ISBN: 978-1-931971-17-1", US 2002/161996 A1, and US 4 792 895 disclose some further devices of that kind.

### SUMMARY

According to the present invention, a media player as defined in claim 1 is provided. A method according to the present invention is defined in claim 6. The dependent claims define some examples of such a media player and method, respectively.

A system and method of platform independent procedural copy protection is therefore provided to media players. The present disclosure proposes a solution whereby a dual virtual machine architecture is provided to next generation media players. The present disclosure further proposes utilizing a hardware-based embedded security subsystem such as a trusted platform module (TPM) to interface with certain aspects of the virtual machine architecture.

The dual virtual machine architecture in accordance with the present disclosure consists of a high level virtual machine and a low level virtual machine. The low-level virtual machine is designed to support low-level media decryption and decoding functions, whereas the high level virtual machine is designed to handle application layer activities. The architecture therefore partitions security software from application software.

In general, a virtual machine that is best suited for procedural security more closely resembles the instruction set of an actual hardware CPU. That is, it supports pointers, and no underlying distinction is made between executable code and data. This first type of virtual machine is therefore named a "low-level VM", or "Security-VM."' The low-level virtual machine is designed to resemble a conventional CPU supporting tamper resistant software techniques.

The downside to a virtual machine like this is that programming errors or unexpected runtime conditions tend to be fatal. For a security system, this can be considered a strength, but for applications (which are much more complicated, and typically have less intensive test coverage) this is a liability.

For applications, a "high-level VM " that manages more of the computational details "behind-the-scenes" allows more dependable application programs to be developed that behave in a more predictable and robust fashion. A typical example of a "high-level virtual machine is Java. For instance, Java does not have support for the concepts of "pointer" or explicit memory management (which are common sources of programming errors), but does support "exception handling" which helps programs and programmers handle unexpected runtime conditions in a predictable way.

The high-level, or application level virtual machine is designed to be full featured, and provide for a rich application interface.

Therefore, it is ideal to combine the benefits of both a low-level VM and a high-level VM in order to provide platform independent security functions that work in combination with other applications. Furthermore, a trusted platform module provides hardware based root of trust by securely querying and validating the execution environment.

In an exemplary embodiment, the present disclosure is used for the purposes of renewable security and copy protection in DVD and CD players. However, such an architecture also supports the playback of media stored on a hard drive, solid state memory or that which is delivered over a network.

As mentioned above, the low-level virtual machine is designed to support low-level media decryption and decoding functions. In next generation media (NGM) applications, this low-level virtual machine would also be responsible for bootstrapping the high-level VM. The high-level VM handles application layer activities, like advanced user interfaces, misc. IO, and network activities.

The dual VM architecture of the present disclosure is novel. The dual VM architecture provides a "peer" relationship unlike the conventional "stacked VM" relationship. One example of a stacked relationship of one VM running on top of another, would be a PowerPC (like in a Mac), running a windows emulator (x86 emulator or VM), which in turn executes Java VM.

Furthermore, the combination of such a dual VM architecture with a hardware based trusted computing module is novel.

The present disclosure extends the use of procedural security to media such as CD's and DVD's. In addition, procedural security also allows the content owner much more flexible rights management than declarative systems. This flexibility can be used to implement full fledged Digital Rights Management (DRM) systems, as opposed to simple Copy Protection (CP) provided by prior art static security systems like CSS.

The foregoing and other objects, features, and advantages of the present disclosure will be become apparent from a reading of the following detailed description of exemplary embodiments thereof, which illustrate the features and advantages of the disclosure.

### BRIEF DESCRIPTION OF THE DRAWINGS

FIG. **1** is a diagram of a media player architecture in a computing environment according to an exemplary embodiment.
FIG. 2 is a block diagram depicting the interaction and functionalities of the low-level virtual manager and the high-level virtual manager according to an exemplary embodiment.

It should be appreciated that for simplicity and clarity of illustration, elements shown in the Figures have not necessarily been drawn to scale. For example, the dimensions of some of the elements are exaggerated relative to each other for clarity. Further, where considered appropriate, reference numerals have been repeated among the Figures to indicate corresponding elements.

### DETAILED DESCRIPTION

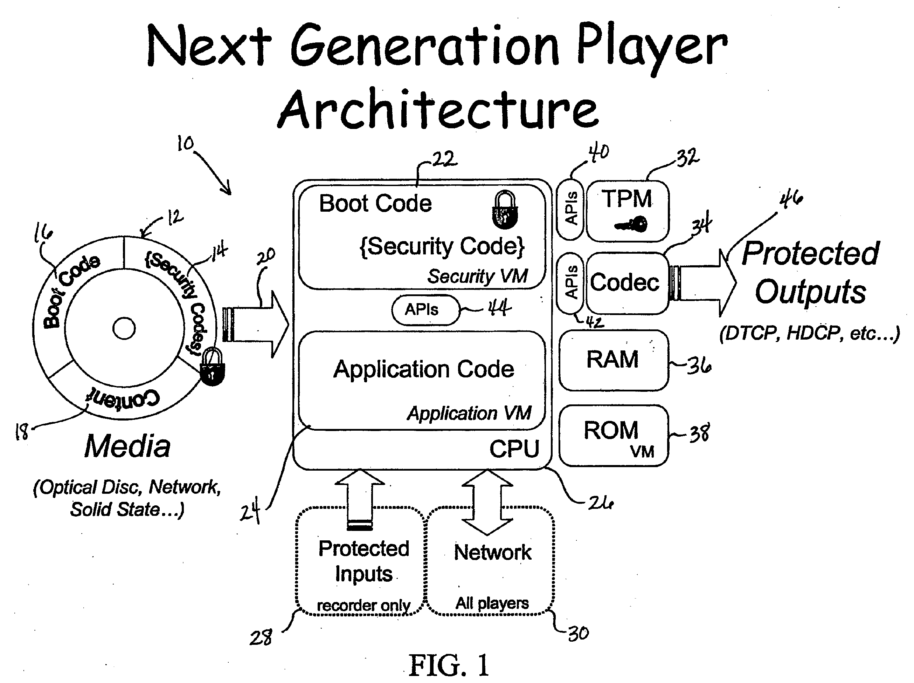

Detailed descriptions are disclosed herein; however, it is to be understood that the disclosed embodiments are merely exemplary of the invention, which may be embodied in various forms. Therefore, specific structural and functional details disclosed herein are not to be interpreted as limiting, but merely as a basis for claims and as a representative basis for teaching one skilled in the art to variously employ the present disclosure in virtually any appropriately detailed structure. Reference will now be made in detail to that disclosure which is illustrated in the accompanying drawing (Figs. 1-2).

The system and method of the present disclosure provides a dual virtual machine architecture for use media players. One VM is designed to support security functions such as media decryption and decoding. In next-generation media applications, the low-level VM may be responsible for bootstrapping the application level VM. The high-level or application level VM handles application layer activities, like advanced user interfaces, misc. 10, and network activities.

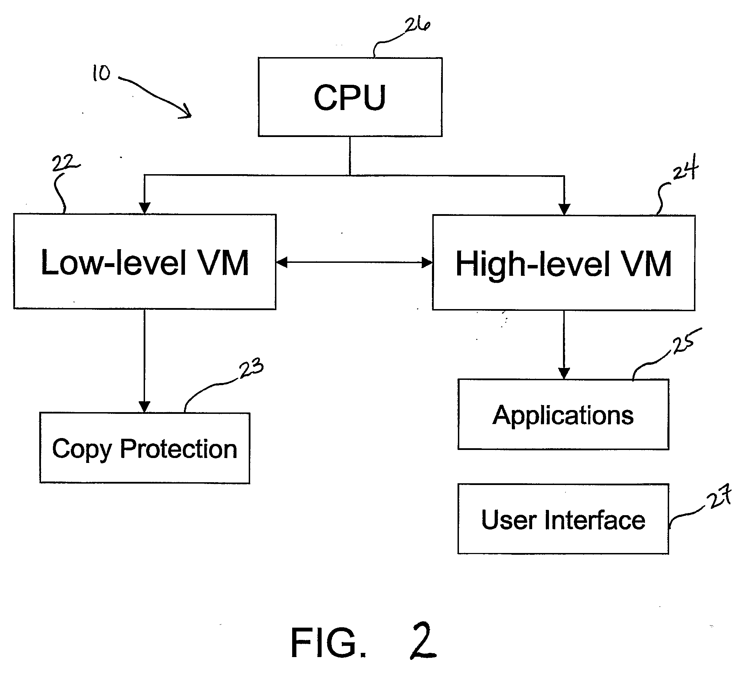

FIGs. 1 and 2 depict of a media player architecture in a computing environment 10 according to an exemplary embodiment. Specifically, shown therein is a media source (e.g., a DVD, an optical disk, a solid-state device, or a network) that includes media data or content 18, security codes 12 for permitting the media to be played back on the media player, and boot codes 16.

The media playback device in accordance with the present disclosure contains a central processing unit 26 capable of running at leas one Virtual Machine (VM). The Virtual Machine, in an exemplary embodiment, is a dual virtual machine architecture, comprising a low-level VM (e.g., a security VM) 22 and a high-level VM (e.g., an application VM) 24 running on the CPU 26. Programs that are run in the VM may execute and enforce usage rules as well as update cryptographic algorithms. The computing environment 10 may also include Application Program Interfaces (API's) 40-44 which are a set of routines or protocols for permitting various programs to communicate with each other.

In one aspect any one of the VM (22 or 24) may control the other VM. In another aspect, the high-level and low-level virtual machines function as peers, in a non-hierarchical manner, passing messages between themselves. These messages may be implemented as "foreign-function calls", where one virtual machine calls a routine in the other virtual machine, or as conventional messages passed along a communications channel.

For instance, the application VM (or high-level VM) 24 would call the security-VM (or low-level VM) 22 in order to start playback (and hence transparent decoding) of media content 18.

Likewise, code in the security VM 22 would call the application VM 24 to let it know about synchronization events or decoding problems (for example security or permission problems).

For example, in the situation where media has been copied off of it's original optical media, the security VM 22 would inform the application VM 24 that it needs a key in order to continue playing. In response, the application VM 24 would display a message, via the application level functions 25, notifying the user that they may "rent" this movie for a certain duration through the user interface 27. If the user chooses to do this, the user must engage in a transaction with a studio server to obtain an 'opaque message' (only understandable by the VM) that contains the key. The application VM 24 then passes the message containing the key back to the security VM 22 and the copy protection algorithms 23 for authentication.

The media playback device further contains a processing module (e.g., a Trusted Processing Module or TPM) 32. The TPM specification is part of the Trusted Computing Platform Alliance (TCPA) specification created by the Trusted Computing Group (TCG) (htttp://www.trustedcomputinggroup.org). The TPM 32 contains decryption keys and handles secure cryptographic computations. The media playback device further contains API's 40, 42 allowing any program running in the Virtual Machine to query the device's I/O hardware and TPM. This allows a program executing in the VM to make intelligent choices for usage rules. A decoding module 34, attached to the CPU 26, is further provided for unpacking encoded audio/video streams.

In general, a trusted platform enables an entity to determine the state of the software or computing environment 10 in that platform and to seal data to a particular software environment in that platform. The entity deduces whether the state of the computing environment is acceptable and performs some transaction with that platform. If the transaction involves sensitive data that must be stored on the platform, the entity can ensure that that data is held in a confidential format unless the state of the computing environment in that platform is acceptable to the entity.

To enable this, a Trusted Platform provides information to enable the entity to deduce the software environment in a Trusted Platform. That information is reliably measured and reported to the entity. At the same time, a Trusted Platform provides a means to encrypt cryptographic keys and to state the software environment that must be in place before the keys can be decrypted.

A "trusted measurement root" measures certain platform characteristics, logs the measurement data in a measurement store, and stores the final result in a TPM (which contains the root of trust for storing and reporting integrity metrics). The TPM is therefore a secure storage location for all decryption keys. The TPM also handles most cryptographic computations and functions.

The media playback device furthermore has secure, protected inputs and outputs 28, the ability to network with other players 30, memory devices (e.g., RAM 36 and ROM 38).

Thus, according to the exemplary embodiment, separate virtual machines (VM) run in the same computing environment that includes a CPU. The present architecture partitions two virtual managers (viz., the high-level or application VM and the low-level or security VM), wherein the application and security virtual managers communicate through standardized APIs. The functionalities of the application virtual manager includes providing network services to the security code being executed in the security virtual manager, whereas media access and decoding functions are mediated by the security VM such that content security is transparent to application authors.

With regards to the computational complexity, the security VM has low impact on system resources, is a simple, light-weight, low-level, and secure, and appropriate software for this VM may be provided by security vendors. The application VM has relatively larger CPU and memory impact and is responsible for user Interface and input/output functions.

The present disclosure is not limited to use in media players such as conventional CD and DVD players, but could be expanded to run on a PC, or more generalized hardware system which includes functionality to play removable media.

The foregoing description of the preferred embodiments of the disclosure has been presented for the purposes of illustration and description. Other objects, features, and advantages of the present disclosure will be become apparent from a reading of the following Appendix. It is not intended to be exhaustive or to limit the disclosure to the precise form disclosed. Many modifications and variations are possible in light of the above teaching.

## Claims

1. A media player for providing copy protection, the media player comprising:
a security virtual machine designed to support security decryption and decoding functions for the media player;
an application virtual machine designed to support application level functions for the media player through a user interface, and wherein the application virtual machine is a high level virtual machine and the security virtual machine is a low level virtual machine; and
a processing unit configured to run the security virtual machine and the application virtual machine, the processing unit having a processing unit instruction set;
wherein the security virtual machine is further designed to support a first instruction set and the application virtual machine is further designed to support a second instruction set; and
wherein the first instruction set resembles the processing unit instruction set as both the first instruction set and the processing unit instruction set support pointers, and wherein the second instruction set does not support pointers.

2. A method of providing copy protection, the method comprising:
performing security decryption and decoding functions for the media player using a security virtual machine running on a processing unit, the processing unit having a processing unit instruction set;
performing application level functions for the media player through a user interface using the application virtual machine running on the processing unit; and
wherein the application virtual machine is a high level virtual machine and the security virtual machine is a low level virtual machine;
wherein the security virtual machine is further designed to support a first instruction set and the application virtual machine is further designed to support a second instruction set; and
wherein the first instruction set resembles the processing unit instruction set as both the first instruction set and the processing unit instruction set support pointers, and wherein the second instruction set does not support pointers.

## Patentansprüche

1. Ein Medienabspielgerät zum Bereitstellen eines Kopierschutzes, das Medienabspielgerät aufweisend:
eine Sicherheit-Virtuelle-Maschine, die ausgestaltet ist, um Sicherheits-Entschlüsselungs- und Dekodierfunktionen für das Medianabspielgerät zu unterstützen,
eine Anwendung-Virtuelle-Maschine, die ausgestaltet ist, um Anwendungslevel-Funktionen für das Medienabspielgerät durch eine Nutzerschnittstelle zu unterstützen, und wobei die Anwendung-Virtuelle-Maschine eine Hohes-Level-Virtuelle-Maschine ist und die Sicherheit-Virtuelle-Maschine eine Niedrig-Level-Virtuelle Maschine ist, und
eine Verarbeitungseinheit, die ausgebildet ist, um die Sicherheit-Virtuelle-Maschine und die Anwendung-Virtuelle-Maschine auszuführen, wobei die Verarbeitungseinheit einen Verarbeitungseinheit-Befehlssatz hat,
wobei die Sicherheit-Virtuelle-Maschine ferner ausgestaltet ist, um einen ersten Befehlssatz zu unterstützen, und die Anwendung-Virtuelle-Maschine ferner ausgestaltet ist, um einen zweiten Befehlssatz zu unterstützen, und
wobei der erste Befehlssatz dem Verarbeitungseinheit-Befehlssatz gleicht, indem sowohl der erste Befehlssatz als auch der Verarbeitungseinheit-Befehlssatz Zeiger unterstützen, und wobei der zweite Befehlssatz Zeiger nicht unterstützt.

2. Ein Verfahren zum Bereitstellen eines Kopierschutzes, das Verfahren aufweisend:
Durchführen von Sicherheits-Entschlüsselungs- und Dekodierfunktionen für das Medienabspielgerät unter Verwendung einer Sicherheit-Virtuelle Maschine, die auf der Verarbeitungseinheit ausgeführt wird, wobei die Verarbeitungseinheit einen Verarbeitungseinheit-Befehlssatz hat,
Durchführen von Anwendungslevel-Funktionen für das Medienabspielgerät durch eine Nutzerschnittstelle unter Verwendung der Anwendung-Virtuelle-Maschine, die auf der Verarbeitungseinheit ausgeführt wird, und
wobei die Anwendung-Virtuelle-Maschine eine Hohes-Level-Virtuelle-Maschine ist und die Sicherheit-Virtuelle-Maschine eine Niedrig-Level-Virtuelle Maschine ist,
wobei die Sicherheit-Virtuelle-Maschine ferner ausgestaltet ist, um einen ersten Befehlssatz zu unterstützen, und die Anwendung-Virtuelle-Maschine ferner ausgestaltet ist, um einen zweiten Befehlssatz zu unterstützen, und
wobei der erste Befehlssatz dem Verarbeitungseinheit-Befehlssatz gleicht, indem sowohl der erste Befehlssatz als auch der Verarbeitungseinheit-Befehlssatz Zeiger unterstützen, und wobei der zweite Befehlssatz Zeiger nicht unterstützt.

## Revendications

1. Lecteur multimédia destiné à fournir une protection contre la copie, le lecteur multimédia comprenant :
une machine virtuelle de sécurité conçue de façon à supporter des fonctions de décodage et de déchiffrement de sécurité du lecteur multimédia ;
une machine virtuelle d'application conçue de façon à supporter des fonctions au niveau application du lecteur multimédia à travers une interface utilisateur, et dans lequel la machine virtuelle d'application est une machine virtuelle de niveau élevé et la machine virtuelle de sécurité est une machine virtuelle de niveau inférieur ; et
une unité de traitement configurée de façon à faire fonctionner la machine virtuelle de sécurité et la machine virtuelle d'application, l'unité de traitement présentant un jeu d'instructions d'unité de traitement ;
dans lequel la machine virtuelle de sécurité est conçue en outre de façon à supporter un premier jeu d'instructions, et la machine virtuelle d'application est conçue en outre de façon à supporter un second jeu d'instructions ; et
dans lequel le premier jeu d'instructions ressemble au jeu d'instructions de l'unité de traitement étant donné que le premier jeu d'instructions et le jeu d'instructions de l'unité de traitement supportent des pointeurs, et dans lequel le second jeu d'instructions ne supporte pas de pointeurs.

2. Procédé destiné à fournir une protection contre la copie, le procédé comprenant les étapes consistant à :
exécuter des fonctions de décodage et de déchiffrement de sécurité du lecteur multimédia à l'aide d'une machine virtuelle de sécurité destinée à fonctionner sur une unité de traitement, l'unité de traitement présentant un jeu d'instructions d'unité de traitement ;
exécuter des fonctions au niveau application du lecteur multimédia à travers une interface utilisateur à l'aide d'une machine virtuelle d'application qui fonctionne sur l'unité de traitement ; et
dans lequel la machine virtuelle d'application est une machine virtuelle de niveau élevé et la machine virtuelle de sécurité est une machine virtuelle de niveau inférieur ;
dans lequel la machine virtuelle de sécurité est conçue en outre de façon à supporter un premier jeu d'instructions, et la machine virtuelle d'application est conçue en outre de façon à supporter un second jeu d'instructions ; et
dans lequel le premier jeu d'instructions ressemble au jeu d'instructions de l'unité de traitement étant donné que le premier jeu d'instructions et le jeu d'instructions de l'unité de traitement supportent des pointeurs, et dans lequel le second jeu d'instructions ne supporte pas de pointeurs.
